# EUROPÄISCHE PATENTANMELDUNG

(11) **EP 4 806 853 A1**
(43) Veröffentlichungstag der Anmeldung: **16.09.2026**
(21) Anmeldenummer: 25162872.3
(22) Anmeldetag: 11.03.2025
(51) Int. Cl.: C02F 1/28, C02F 1/00, C02F 101/30, C02F 101/36

(54) **IM ERDREICH VERLEGBARE UND AN EINER GEBÄUDEWAND ODER FASSADE ANBRINGBARE FASSADENWASSERREINIGUNGSVORRICHTUNG**

(71) Anmelder: Carpurit AG, 3076 Worb (CH)
(72) Erfinder: Schwarzer, Hans, 3076 Worb (CH); Nakanishi, Hitomi, 3202 Frauenkappelen (CH); Nuessli, Michael, 3076 Worb (CH)
(74) Vertreter: AMMANN PATENTANWÄLTE AG

(57) **Zusammenfassung**

Die vorliegende Erfindung ist gerichtet auf eine Vorrichtung (100) zur Reinigung von Wasser, insbesondere zur Reinigung von Fassadenwasser, umfassend
a) eine wasserdurchlässige und/oder semipermeable Deckschicht (10), durch welche Wasser in die Vorrichtung (100) fliessen kann;
b) eine Bodenschicht (20);
c) eine Reinigungsschicht (30), welches sich zwischen der wasserdurchlässigen und/oder semipermeablen Deckschicht (10) und der Bodenschicht (20) befindet und ein Filtermaterial (40) enthält; sowie
d) eine erste Seite (70); und
e) einen wasserdurchlässigen Bereich (13);
**dadurch gekennzeichnet, dass**
die Bodenschicht (20) wasserundurchlässig ist, und die Vorrichtung
f) eine Lasche (50) an der ersten Seite (70) umfasst, welche form- und/oder kraftschlüssig an der Wand (200) eines Gebäudes oder an der Fassade (210) eines Gebäudes anbringbar ist.
Weitere Gegenstände der Erfindung sind ein Gebäude (1000) umfassend eine Vorrichtung (100) gemäss der vorliegenden Erfindung, sowie deren Verwendung zur Reinigung von Wasser, insbesondere zur Reinigung von Fassadenwasser, und ein Verfahren zum Anbringen der erfindungsgemässen Vorrichtung (100) an einem Gebäude.

## Beschreibung

### Technisches Gebiet der Erfindung

Um unerwünschte Grünbeläge an Hauswänden durch Algen- und/oder Pilzwachstum zu vermeiden, greifen viele Hausbesitzer zu Anstrichen mit Bioziden und/oder Fungiziden. Ihre Hauptaufgabe besteht darin, Algen und Pilze abzutöten, die auf der Aussenwand oder der Fassade wachsen und hauptsächlich durch die Bildung von Kondenswasser verursacht werden. Allein in der Schweiz werden jährlich 50 Tonnen Biozide als Inhaltsstoffe von Fassadenfarben und Beschichtungen von Aussenflächen von Gebäuden verarbeitet. Diese Anstriche sind sehr haltbar, so dass die Fassaden oder Aussenwände, d.h. die Aussenflächen, mehrere Jahre lang geschützt bleiben.

Diese in den Farben enthaltenen Giftstoffe wie beispielsweise per- und polyfluorierte Alkylverbindungen (sog. PFAS) können jedoch die Umwelt verschmutzen, wenn sie durch Regen oder Kondenswasser, das die Aussenfläche eines Gebäudes ständig befeuchtet, ausgewaschen werden oder wenn die Aussenfläche eines Gebäudes mit Wasser und/ oder Reinigungsmitteln gereinigt wird.

Ausserdem verwittert die Fassadenfarbe bzw. die Farbe für die Aussenwände eines Gebäudes im Laufe der Zeit durch jahreszeitliche Temperaturschwankungen und Sonneneinstrahlung. Darüber hinaus lagern sich schädliche Partikel aus dem Luftkondensat an der Aussenfläche eines Gebäudes ab. Die Biozide und Fungizide sowie alle daran adsorbierten Schadstoffpartikel werden früher oder später ausgewaschen und gelangen in den Boden, das Grundwasser, die Kanalisation und/ oder in siedlungsnahe Gewässer.

All diese Biozide, Fungizide und schädlichen Partikel können für den Menschen, der sie über das Trinkwasser aufnimmt, sowie für Fauna und Flora schädlich sein, insbesondere für Wasserorganismen und Fische. Darüber hinaus können Biozide ins Grundwasser gelangen und so das Trinkwasser nachhaltig mit giftigen Substanzen verunreinigen.

Es muss also verhindert werden, dass Biozide und Fungizide oder andere schädliche Partikel, die von Fassaden oder Aussenflächen von Gebäuden im Allgemeinen ausgewaschen werden, oder deren Anstriche in den Boden, das Grundwasser, die Kanalisation und in siedlungsnahe Gewässer gelangen.

Dieses Bedürfnis wird durch die erfindungsgemässe Vorrichtung, sowie die Verwendung der vorliegenden Erfindung befriedigt.

### Stand der Technik

Eine Vorrichtung zur Reinigung von Fassadenwasser, die ins Erdreich eingebracht wird, ist aus dem Stand der Technik noch nicht bekannt.

Die bereits bekannten Vorrichtungen zur Reinigung von verunreinigtem Grundwasser oder von Sedimentwasser, siehe beispielsweise die US 11,673,117 und die US 11,998,891 der Huesker Inc., können nicht an einer Fassade angebracht werden. Ausserdem ist deren Bodenschicht zwingend wasserdurchlässig.

Es war daher die Aufgabe der vorliegenden Erfindung eine Vorrichtung zur Reinigung von Fassadenwasser bereitzustellen, die die Gestaltungsfreiheit von Architekten und Bauherren nicht einschränkt. Eine weitere Aufgabe war es, eine Vorrichtung zur Reinigung von Fassadenwasser bereitzustellen, die ins Erdreich eingebracht und an der Gebäudewand bzw. Fassade angebracht werden kann.

### Zusammenfassung der Erfindung

Diese Aufgabe wird durch die erfindungsgemässe Vorrichtung, sowie die erfindungsgemässe Verwendung erfüllt, da damit vorteilhafterweise bis zu 90% verhindert wird, bevorzugt zu ≥ 95%, besonders bevorzugt zu ≥ 99%, ganz besonders bevorzugt zu 100%, dass Biozide oder andere Giftstoffe ins Ökosystem gelangen.

Die erfindungsgemässe Vorrichtung ist eine Vorrichtung zur Reinigung von Wasser, insbesondere zur Reinigung von Fassadenwasser, umfassend
a) eine wasserdurchlässige und/oder semipermeable Deckschicht, durch welche Wasser in die Vorrichtung fliessen kann;
b) eine Bodenschicht;
c) eine Reinigungsschicht, welche sich zwischen der wasserdurchlässigen und/oder semipermeablen Deckschicht und der Bodenschicht befindet und ein Filtermaterial enthält; sowie
d) eine erste Seite; und
e) einen wasserdurchlässigen Bereich;
**dadurch gekennzeichnet, dass**
die Bodenschicht wasserundurchlässig ist, und die Vorrichtung
f) eine Lasche an der ersten Seite umfasst, welche form- und/oder kraftschlüssig an der Wand (200) eines Gebäudes oder an der Fassade (210) eines Gebäudes anbringbar ist.

Die erfindungsgemässe Vorrichtung weist also zumindest einen Reinigungsbereich (zumindest wasserdurchlässige/semipermeable Deckschicht + Reinigungsschicht + wasserundurchlässige Bodenschicht + wasserdurchlässiger Bereich) auf, sowie eine Lasche an der ersten Seite dieses Reinigungsbereichs, um diesen Reinigungsbereich damit an einer Gebäudewand bzw. an der Fassade einer Gebäudewand zu befestigen.

Die Deckschicht kann sowohl semipermeable als auch wasserdurchlässige Bereiche aufweisen. Bevorzugt ist die Deckschicht über mindestens 90% ihrer gesamten Fläche wasserdurchlässig, besonders bevorzugt ist die Deckschicht wasserdurchlässig.

Mit «Wand» ist der tragende Teil des Gebäudes gemeint, während der Begriff «Fassade» die äusserste Fläche des Gebäudes meint, also den sichtbaren Teil des Gebäudes. Die Fassade umfasst auch die Dämmschichten und den Verputz.

Als Dämmschicht werden bevorzugt Schichten aus Steinwolle oder expandiertem Polystyrol (EPS-Hartschaumplatten) sowie weitere der Fachperson bekannte Materialien eingesetzt. Bevorzugt werden an Gebäuden über- und unterirdisch unterschiedliche Dämmmaterialien verwendet. Es können sowohl wasserundurchlässige als auch dampfdurchlässige Dämmschichten verwendet werden. Bevorzugt wird die erfindungsgemässe Vorrichtung an wasserundurchlässiger Perimeterisolation angebracht.

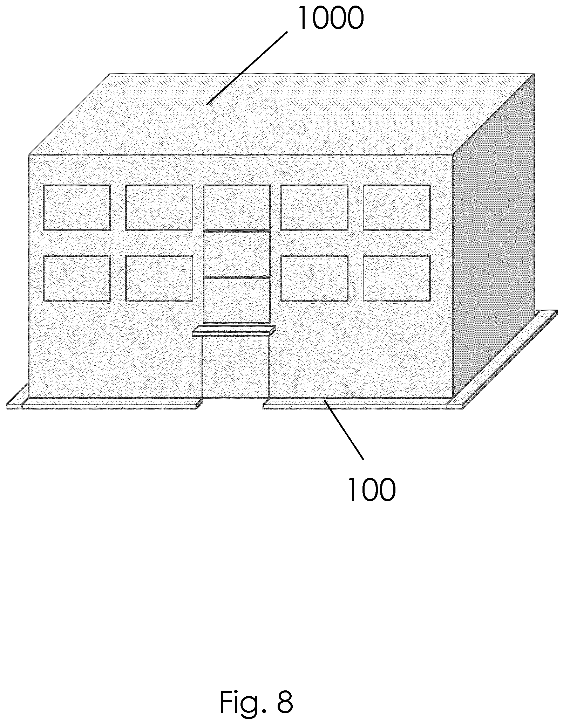

Der Reinigungsbereich ist dreidimensional ausgebildet, wobei jede beliebige Form denkbar ist. Insbesondere ist die Vorrichtung als «Endlos»-Rolle ausgebildet, die dann entlang der Wand eines Gebäudes abgerollt und entsprechend abgeschnitten werden kann (siehe Figur 8). Die Schnittkanten werden dann vorzugsweise wasserdicht verschlossen.

In einer bevorzugten Ausführungsform ist der Reinigungsbereich als Matte oder Matratze ausgebildet, insbesondere als rechteckige Matte, d.h. als Quader. Die Erfindung ist jedoch nicht auf diese Ausgestaltung beschränkt. Die Lasche befindet sich hierbei bevorzugt an der ersten Längsseite (d.h. also an der der Wand bzw. Fassade zugewandten parallelen Seite) der Matte und der wasserdurchlässige Bereich an der zweiten Längsseite (d.h. also an der der Wand bzw. Fassade abgewandten parallelen Seite), wobei die erste und die zweite Längsseite einander gegenüberliegen. Insbesondere ist die Matte als «Endlos»-Rolle ausgebildet, die über die Schmalseite (Breite der Rolle) aufgerollt werden kann, und an der Schmalseite oder den Schmalseiten beispielsweise entweder gerade oder im 45° Winkel abgeschnitten werden kann. Die Schnittkanten werden dann vorzugsweise wasserdicht verschlossen.

In einer bevorzugten Ausführungsform ist die Lasche aus demselben Material wie die wasserundurchlässige Bodenschicht gefertigt. Besonders bevorzugt ist die Lasche eine Verlängerung der wasserundurchlässigen Bodenschicht. Idealerweise erstreckt sich die Lasche über die ganze Längsseite.

In einer weiteren bevorzugten Ausführungsform umfasst die Vorrichtung ausserdem g) eine Lasche an der zweiten Seite. Ist die Vorrichtung insbesondere als rechteckige Matte ausgebildet, so befinden sich vorzugsweise beide Laschen jeweils an den Längsseiten der Matte. Hierbei dient die eine Lasche der Befestigung der Vorrichtung an der Fassade eines Gebäudes, und die andere Lasche als Montagehilfe bzw. als Abtropflasche für das aus der Vorrichtung austretende gereinigte Wasser.

Sind zwei Laschen einander gegenüber liegend in der Vorrichtung vorhanden, bevorzugt beispielsweise an den beiden Längsseiten bei rechteckiger Ausgestaltung der Vorrichtung, so hat dies ausserdem den Vorteil, dass die Vorrichtung sowohl über die erste Lasche als auch über die zweite Lasche an der Wand bzw. Fassade eines Gebäudes anbringbar ist, und so eine bestimmte Ausrichtung der Vorrichtung bei der Montage entfallen kann.

In einer Ausführungsform der erfindungsgemässen Vorrichtung wird auf die Oberseite der Lasche oder der Laschen ein überstehendes Glasfaser-Gitter angebracht, welches nach dem Einbau als Armierungsgitter des Gebäudes dient, und mit Verputz überzogen wird. D.h. die Lasche oder die Laschen kann/können so direkt in den Verputz der Häuserfassade eingebracht werden. Bevorzugt ist die Lasche bzw. sind die Laschen hierbei wasserundurchlässig. Besonders bevorzugt wird nur die erste gebäudeseitige Lasche mit einem Glasfaser-Gitter versehen. Das Gitter könnte auch aus anderen Materialien gefertigt sein, die für Armierungsgitter verwendet werden, und die bevorzugt biegbar sind, da die erfindungsgemässe Vorrichtung ja bevorzugt als «Endlos-Rolle» transportiert wird.

In einer bevorzugten Ausführungsform der erfindungsgemässen Vorrichtung ist also ein Glasfaser-Gitter auf der Oberseite der Lasche angebracht, wobei das Gitter die Lasche deutlich überragt. Die Lasche mit Gitter wird bei der Montage 90° gegen oben gebogen. Die wasserundurchlässige untere Lasche liegt dann komplett auf der Isolation des Gebäudes auf und das angeklebte Gitternetz wird mit Verputz überzogen. Auf diese Weise ist konstruktiv sichergestellt, dass sämtliches Fassadenwasser in die Vorrichtung fliesst.

Bevorzugt ist die Lasche an der ersten Seite eine Verlängerung der wasserundurchlässigen Bodenschicht, optional in Kombination mit einer Verlängerung der wasserdurchlässigen Deckschicht. D.h. die Lasche oder die Laschen sind bevorzugt wasserundurchlässig.

Bevorzugt ist die Vorrichtung aufrollbar, insbesondere erfolgt das Aufrollen über die Schmalseite. So kann die Vorrichtung sehr einfach der Länge eines Gebäudes entlang verlegt werden, indem sie im aufgerollten Zustand angeliefert und dann zur Montage abgerollt wird. D.h. die erfindungsgemässe Vorrichtung kann beispielsweise eine Breite im Bereich von 50 bis 100 cm und eine Länge im Bereich von ca. 15 bis 50 m, bevorzugt von ca. 15 bis 25 m, aufweisen. Diese Angaben sind rein illustrativ und beschränken die erfindungsgemässe Vorrichtung in keiner Weise.

Da die Vorrichtung bevorzugt unter einer Schicht aus Erde und/oder Steinen verlegt wird, ist es von Vorteil, wenn die Reinigungsschicht der Vorrichtung druckfest ist. D.h. die Dicke der Vorrichtung, insbesondere wenn sie als rechteckige Matte ausgebildet ist, bleibt beim Verlegen unter einer Schicht aus Erde und/oder Steinen konstant. Die Druckfestigkeit der Reinigungsschicht wird insbesondere dadurch erreicht, dass die Reinigungsschicht als strukturierte Schicht ausgebildet ist. Hierbei ist jede Art von Struktur geeignet, die Hohlräume aufweist, die mit Filtermaterial gefüllt werden können. Die Druckfestigkeit ist vorteilhafterweise mindestens 500 kg/m² oder mehr.

Das Gewicht der Matte ohne Filtermaterial ist vorteilhafterweise in einem Bereich von 100 g bis 1 kg pro Quadratmeter (m²), jedoch sind auch davon abweichende Gewichte von der Erfindung umfasst.

In einer bevorzugten Ausführungsform ist die Reinigungsschicht als Noppenplastik oder als offene Struktur ausgebildet, deren Zwischenräume mit dem Filtermaterial gefüllt sind. Besonders bevorzugt sind an beiden sich gegenüberliegenden Seiten Laschen angebracht, so dass die Anbringung an der Gebäudewand bzw. der Gebäudefassade über jede der beiden Laschen erfolgen kann.

Unter «offener Struktur» versteht man jede beliebige dreidimensionale, bevorzugt regelmässige, Anordnung, die Zwischenräume aufweist, die mit dem Filtermaterial gefüllt werden können, wobei die Anordnung bevorzugt druckfest ist.

Unter "Noppenplastik" versteht man beispielsweise eine Schicht, bei der eine Vielzahl von hohlen Kegelstümpfen symmetrisch angeordnet ist. Beispielsweise sind die Umfänge der Grundflächen der hohlen Kegelstümpfe 2-dimensional in Reihen nebeneinander angeordnet. Eine versetzte Anordnung wäre auch möglich. Deren Herstellung ist beispielsweise möglich, indem eine Kunststofffolie, bevorzugt unter Erwärmung, nach oben gedrückt wird, bzw. unter Erwärmung und unter Vakuum in eine Form gesaugt wird. Die gefüllten Zwischenräume zwischen den Kegelstümpfen bilden die wasserundurchlässige Bodenschicht, während die wasserdurchlässige Deckschicht auf die Deckflächen der Kegelstümpfe aufgebracht werden kann.

Hierbei ist beispielsweise bevorzugt der Durchmesser der Grundfläche der Kegelstümpfe im Bereich von 1,0 bis 5 cm und der Durchmesser der Deckfläche der Kegelstümpfe im Bereich von 0,3 bis 4,0 cm, besonders bevorzugt ist der Durchmesser der Grundfläche im Bereich von 1,5 bis 3,0 cm und der Durchmesser der Deckfläche im Bereich von 0,5 bis 1,0 cm, ganz besonders bevorzugt ist der Durchmesser der Grundfläche im Bereich von 1,5 bis 2,5 cm und der Durchmesser der Deckfläche im Bereich von 0,6 bis 0,9 cm. Die Höhe der Kegelstümpfe ist variabel und beispielsweise in einem Bereich, der dem Durchmesser der Deckfläche und dem Durchmesser der Grundfläche der Kegelstümpfe entspricht. Idealerweise sind die Kegelstümpfe zu mindestens 90% identisch, bevorzugt sind alle Kegelstümpfe im Rahmen der fertigungsbedingten Fehlergrenzen gleich.

In einer speziellen Ausführungsform ist der Durchmesser der Grundfläche 2,0 cm, der Durchmesser der Deckfläche 0,8 cm und die Höhe des Kegelstumpfes 0,8 cm.

Die angegebenen Grössen sind rein illustrativ und nicht limitierend.

D.h. die wasserundurchlässige Bodenschicht ist bevorzugt eine Kunststofffolie.

Das Filtermaterial kann Aktivkohle und/oder jede andere Substanz sein, die in der Lage ist, im Wasser enthaltene umweltschädliche Partikel wie beispielsweise Biozide, Fungizide und/oder PFAS zu adsorbieren bzw. zu absorbieren. Nicht-limitierende Beispiele hierfür sind Molekularsieb, Apatit, Eisensulfid, organophiler Ton, Siderit, Zeolith, nullwertiges Eisen und Mischungen davon.

Das Filtermaterial kann, je nach Anwendung, in jeder geeigneten Form oder Größe bereitgestellt werden, z. B. als Pulver, Chips, Körner oder sandähnlich.

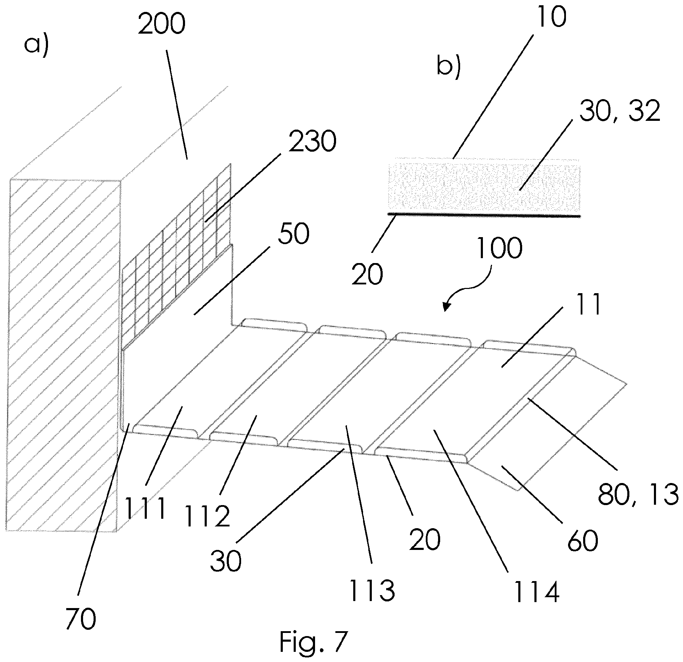

Je nach zu erwartenden Schadstoffen, kann das Filtermaterial entsprechend angepasst werden. Es können auch mehrere Reinigungsschichten mit unterschiedlichen Filtermaterialien vorhanden sein, d.h. der Reinigungsbereich kann in vertikaler Ausdehnung Abschnitte mit unterschiedlichen Filtermaterialien umfassen. Ebenso ist es möglich, dass der Reinigungsbereich mehrere Abschnitte mit unterschiedlichen Filtermaterialien in horizontaler Richtung umfasst, also unterschiedliche Abschnitte in horizontaler Ausdehnung des Reinigungsbereichs, wie in Fig. 7 gezeigt. Das verschmutzte Wasser fliesst dann durch die unterschiedlichen Abschnitte und wird so schrittweise gereinigt.

Das Filtermaterial umfasst bevorzugt Aktivkohle und/oder Molekularsieb und/oder ein anderes ab- bzw. adsorbierendes Material. Die Aktivkohle kann hierbei in jeder geeigneten Form oder Größe bereitgestellt werden, z. B. als Pulver, Chips, Körner oder sandähnlich.

Das Filtermaterial kann dabei insbesondere ausgewählt sein aus der Gruppe bestehend aus Aktivkohle, Molekularsieb und deren Mischungen, wobei Aktivkohle besonders bevorzugt ist. Das Filtermaterial kann in Form eines Pulvers, eines Granulats, eines Gewebes oder eines Schwamms eingesetzt werden. Bevorzugt wird hierbei auf Filtermaterialien, insbesondere Aktivkohle, in Granulatform zurückgegriffen. Die erfindungsgemäss eingesetzten Filtermaterialien können auch solche sein, die thermisch und/oder chemisch regenerierbar sind. Dies wäre insbesondere bei Aktivkohle sinnvoll.

Das Filtermaterial kann ferner Füllstoffe und/oder Körnungsmaterial enthalten. Hierbei liegen die Füllstoffe und/oder das Körnungsmaterial vermengt mit dem Filtermaterial, insbesondere Aktivkohle, vor. Es hat sich vielfach als sehr zweckmässig erwiesen, wenn die Dichte des Filtermaterials und die Dichte der Füllstoffe oder des Körnungsmaterials nicht mehr als etwa 15 %, bevorzugt nicht mehr als etwa 10% und besonders bevorzugt nicht mehr als 5%, voneinander abweichen. Besonders vorteilhaft stimmen die Dichten des Filtermaterials, insbesondere der Aktivkohle, und die Dichte der Füllstoffe oder des Körnungsmaterials im Wesentlichen überein. Bei den Dichten handelt es sich um die Schüttdichten der genannten Materialien, jeweils ermittelt gemäss der Norm DIN EN 1097-3:1998-06. Des Weiteren kann für das Filtermaterial auch auf mit Aktivkohle geträgerte Pulver- oder Granulatmaterialien zurückgegriffen werden.

Die wasserdurchlässige Deckschicht kann jedes beliebige wasserdurchlässige Gewirk, Gewebe, Gestrick und/oder Vlies sein. Es kann eine beliebige Anzahl von wasserdurchlässigen Deckschichten verwendet werden.

Die wasserdurchlässige Deckschicht ist bevorzugt ein wasserdurchlässiges Vlies oder eine Kombination aus einem Geovlies und einem feineren Vlies ist, wobei das Geovlies bevorzugt die oberste Schicht ist. Idealerweise werden die Deckschichten in Richtung der Reinigungsschicht immer feiner, d.h. die oberste Deckschicht hält die gröbsten Verunreinigungen fern und die an die Reinigungsschicht direkt angrenzende Deckschicht die feinsten Verunreinigungen. Dadurch gelangt das verschmutzte Wasser fast ohne Feststoffe in das Filtermaterial, wodurch die Lebensdauer der Reinigungsschicht erhöht wird.

In einer bevorzugten Ausführungsform ist das Geovlies beispielswiese derart gestaltet, dass Teilchen mit einer Grösse im Bereich von 0,5 bis 1,0 mm zurückgehalten werden, also nicht in die Reinigungsschicht gelangen, während das feinere Vlies bevorzugt so gestaltet ist, dass Teilchen mit einer Grösse im Bereich von 0,01 bis 0,2 mm zurückgehalten werden. Die Porengrösse der Vliese ist individuell wählbar und insbesondere an die Gegebenheiten des Erdreichs anpassbar. Die vorstehend genannten Porengrössen sind also ein nicht-limitierendes Beispiel. Selbstverständlich kann auch jedes andere Gewirk und/oder Gestrick als Deckschicht verwendet werden, solange es wasserdurchlässig ist.

Die Vorrichtung ist insbesondere auch dadurch gekennzeichnet, dass sie im Erdreich oder in einer Steinschicht verlegt werden kann. In einer bevorzugten Ausführungsform wird die erfindungsgemässe Vorrichtung entlang der Hausfassade verlegt, leicht unter der Erdoberfläche bzw. (Kiesel)Steinoberfläche. Das herabrinnende bzw. tropfende, mit Verunreinigungen oder Giftstoffen belastete Wasser wird dann über die erfindungsgemässe Vorrichtung geleitet, welches die Biozide und andere Schadstoffe, vorzugweise zu mindestens 90%, besonders bevorzugt zu ≥ 95%, herausfiltert und sauberes Wasser ins Erdreich weitergibt. Die erfindungsgemässe Vorrichtung ist insbesondere für die Dauer zwischen zwei Renovationsperioden der Fassade, also ca. 15 bis 30 Jahre, insbesondere für eine Dauer von mehr als 30 Jahren, ausgelegt.

Idealerweise können sämtliche Materialien der Vorrichtung rezykliert bzw. regeneriert werden. Hierbei können vorteilhafterweise die im Filtermaterial aufgenommenen Biozide, Fungizide, PFAS und/oder andere Giftstoffe unschädlich gemacht werden.

Die erfindungsgemässe Vorrichtung hat folgende Vorteile:
- Sie eliminiert die Schadstoffe effizient, weil sie sie direkt an der Quelle eliminiert, nämlich da, wo das Fassadenwasser in den Boden gelangt. Somit besteht kein Risiko von Leckagen oder Transportverlusten des Wassers.
- Die Vorrichtung ist sehr günstig und fällt bei einem Neubau oder einer Renovation kostenmässig kaum ins Gewicht.
- Sie kann auf Rollen geliefert werden und ist einfach zu verlegen.
- Sie hält langfristig und schützt die Umwelt zuverlässig im Zeitraum zwischen zwei Renovationen einer Gebäudefassade.
- Da sie im Erdreich verlegt wird, wird die Architektur der Häuserfassade dadurch nicht beeinträchtigt.
- Insgesamt sorgt die erfindungsgemässe Vorrichtung dafür, dass die Wand bzw. Fassade des Gebäudes entlang der horizontalen Ausdehnung des Reinigungsbereichs trocken gehalten wird, so dass deren Langlebigkeit erhöht wird, da es nicht zu Feuchtigkeitsschäden kommt.

Ein weiterer Gegenstand der Erfindung ist ein Gebäude, welches die erfindungsgemässe Vorrichtung umfasst, wobei die Vorrichtung an der Fassade des Gebäudes über die Lasche an der ersten Seite der Vorrichtung befestigt ist.

Insbesondere wird die Vorrichtung nach Anbringen an dem Gebäude so verlegt, dass sich zumindest ein Teil der Vorrichtung unterhalb einer Erdschicht und/oder einer Steinschicht befindet. Insbesondere wird die Vorrichtung in geneigter Lage verlegt. D.h. die Querachse der Vorrichtung befindet sich bevorzugt in einem Winkel im Bereich von 5° bis 30° zur Oberfläche der Erd- bzw. Steinschicht, und zwar abfallend von der Gebäudewand bzw. Gebäudefassade weg.

Ein weiterer Gegenstand der vorliegenden Erfindung ist ein Verfahren zum Anbringen der erfindungsgemässen Vorrichtung an einem Gebäude enthaltend den folgenden Schritt:
i) Kraft- oder formschlüssiges Anbringen der Lasche an der Wand eines Gebäudes oder an der Fassade eines Gebäudes; und
ii) Aufbringen von Erde und/oder Steinen auf die Deckschicht.

Ebenfalls von der vorliegenden Erfindung umfasst ist die Verwendung der erfindungsgemässen Vorrichtung zur Reinigung von Wasser, insbesondere zur Reinigung von Fassadenwasser.

### Kurzbeschreibung der Zeichnungen

Fig. 1a) zeigt eine Ausführungsform der erfindungsgemässen Vorrichtung, die mit ihrer Lasche an einer Hauswand befestigt ist, sowie den Weg des Fassadenwassers in diese Vorrichtung. Fig. 1b) zeigt die Reinigungsschicht in Vergrösserung.
Fig. 2a) und b) zeigen eine andere Ausführungsform der erfindungsgemässen Vorrichtung mit zwei Deckschichten und den Weg des Fassadenwassers.
Fig. 3 zeigt eine Probenentnahme in einer Vorrichtung gemäss Fig. 1.
Fig. 4 zeigt den Einbau einer Ausführungsform der erfindungsgemässen Vorrichtung entlang einer Gebäudewand in schräger Aufsicht.
Fig. 5 zeigt den Einbau in Seitenansicht.
Fig. 6a) zeigt eine alternative Ausführungsform der erfindungsgemässen Vorrichtung, die mit ihrer Lasche an einer Hauswand befestigt ist. Fig. 6b) zeigt die alternative Reinigungsschicht in Vergrösserung.
Fig. 7a) zeigt eine weitere Ausführungsform der erfindungsgemässen Vorrichtung, die mit ihrer Lasche an einer Hauswand befestigt ist. Fig. 7b) zeigt die alternative Reinigungsschicht in Vergrösserung.
Fig. 8 zeigt die Verlegung der erfindungsgemässen Vorrichtung um ein Gebäude herum.

### Bevorzugte Ausführungsformen der Erfindung

Die Erfindung umfasst jedwede beliebige Kombination der Merkmale der bevorzugten Ausführungsformen miteinander, auch wenn diese nicht explizit erwähnt worden sind.

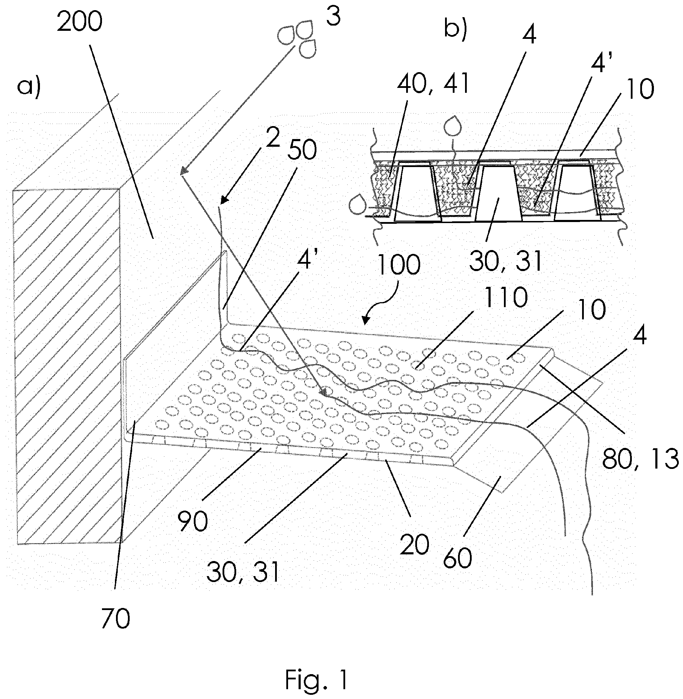

Fig. 1a) zeigt eine Ausführungsform der erfindungsgemässen Vorrichtung 100, die rechteckig als Matte ausgebildet ist und die an ihren Längsseiten 70, 80 jeweils eine Lasche 50, 60 aufweist, die sich idealerweise über die ganze Längsseite erstreckt. Der Reinigungsbereich 110 umfasst eine wasserdurchlässige Deckschicht 10, eine Reinigungsschicht 30 und eine wasserundurchlässige Bodenschicht 20, sowie den wasserdurchlässigen Bereich 13, der hier die zweite Längsseite 80 ist. Die Vorrichtung 100 ist mit ihrer Lasche 50 an ihrer ersten Seite (Längsseite) 70 an einer Hauswand 200 formschlüssig befestigt. Im aufgerollten Zustand ist die Vorrichtung über die Schmalseite 90 aufgerollt.

Die Reinigungsschicht 30 (siehe insbesondere Fig. 1 b)) ist als Noppenplastik 31 ausgebildet, d.h. als Schicht, bei der eine Vielzahl von hohlen Kegelstümpfen symmetrisch angeordnet ist. In dem gezeigten bevorzugten Ausführungsbeispiel sind die Umfänge der Grundflächen der hohlen Kegelstümpfe 2-dimensional in Reihen nebeneinander angeordnet. Eine versetzte Anordnung wäre auch möglich. Die Herstellung dieser Noppenplastik ist möglich, indem eine Kunststofffolie nach oben gedrückt wird. D.h. die wasserundurchlässige Bodenschicht 20 wird durch die Kunststofffolie gebildet. Diese Schicht 20 ist nicht durchgängig, sondern wird durch die "Grundflächen" der hohlen Kegelstümpfe unterbrochen. Als wasserdurchlässige Deckschicht 10 wird bevorzugt ein Geovlies verwendet, das auf die Deckflächen der Kegelstümpfe aufgelegt wird.

Hierbei ist beispielsweise bevorzugt der Durchmesser der Grundfläche der Kegelstümpfe im Bereich von 1,0 bis 5 cm und der Durchmesser der Deckfläche der Kegelstümpfe im Bereich von 0,3 bis 4,0 cm, besonders bevorzugt ist der Durchmesser der Grundfläche im Bereich von 1,5 bis 3,0 cm und der Durchmesser der Deckfläche im Bereich von 0,5 bis 1,0 cm, ganz besonders bevorzugt ist der Durchmesser der Grundfläche im Bereich von 1,5 bis 2,5 cm und der Durchmesser der Deckfläche im Bereich von 0,6 bis 0,9 cm. Die Höhe der Kegelstümpfe ist variabel und beispielsweise in einem Bereich, der dem Durchmesser der Deckfläche und dem Durchmesser der Grundfläche der Kegelstümpfe entspricht. Idealerweise sind die Kegelstümpfe zu mindestens 90% identisch, bevorzugt sind alle Kegelstümpfe im Rahmen der fertigungsbedingten Fehlergrenzen gleich.

Die Zwischenräumen 41 zwischen den Kegelstümpfen sind mit dem Filtermaterial 40 wie beispielsweise Aktivkohle gefüllt.

In Fig. 1a) und b) ist auch der Weg 4, 4' des Fassadenwassers in die erfindungsgemässe Vorrichtung 100 gezeigt. Entweder prallen Regentropfen 3 an der Gebäudewand 200 ab und dringen von oben in die erfindungsgemässe Vorrichtung ein (Weg 4) oder sie (2) fliessen an der Gebäudewand 200 und der Lasche 50 entlang in die Vorrichtung 100, in der sie dann gereinigt werden (Weg 4').

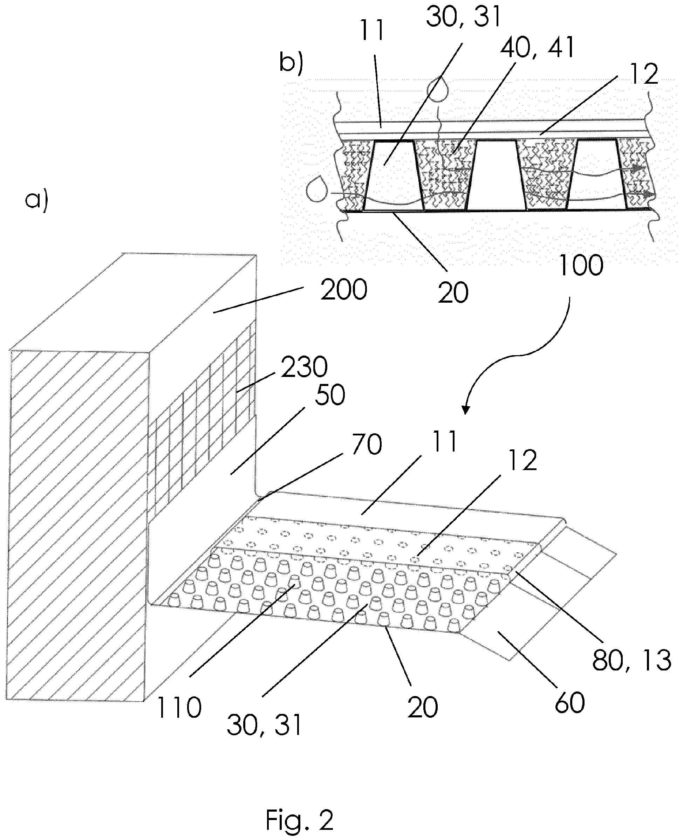

Die in den Fig. 2a) und b) gezeigte Ausführungsform der erfindungsgemässen Vorrichtung 100 weist zwei Deckschichten 11 und 12 auf. Die schichtweise Darstellung in Fig. 2a) ist nur gewählt, um den Aufbau besser zu sehen. Die beiden Deckschichten erstrecken sich vorteilhafterweise über die gesamte Oberfläche des Reinigungsbereichs 110. Hier ist die Lasche 50 direkt mit der Armierung 230 formschlüssig verbunden.

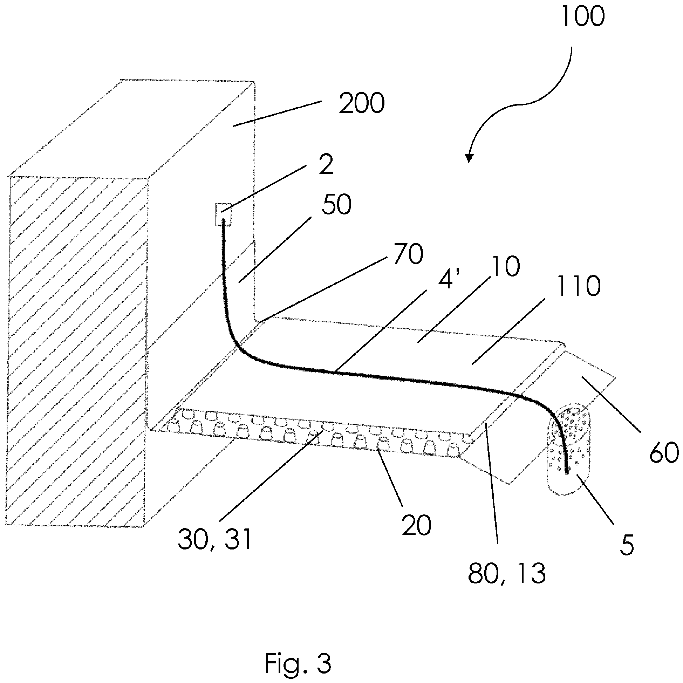

Fig. 3 zeigt eine Probenentnahme in einer Vorrichtung gemäss Fig. 1. Hierbei wird das Fassadenwasser 2, welches entlang des Weges 4' durch die erfindungsgemässe Vorrichtung 100 geflossen ist, in einem an der zweiten (Schmal)Seite 80 der Vorrichtung befindlichen Probenentnahmegefäss 5 gesammelt. Da die Schmalseiten der Vorrichtung 100 wasserdicht verschlossen sind, tritt das Wasser 2 an der zweiten Längsseite 80 aus.

Das Probenentnahmegefäss ist vorteilhafterweise mit einem Geovlies abgedeckt. Es könnte auch durchgängig ausgestaltet sein und einen entsprechenden Sensor enthalten, so dass angezeigt würde, wie sauber das von der Vorrichtung 100 ins Erdreich austretende Wasser ist.

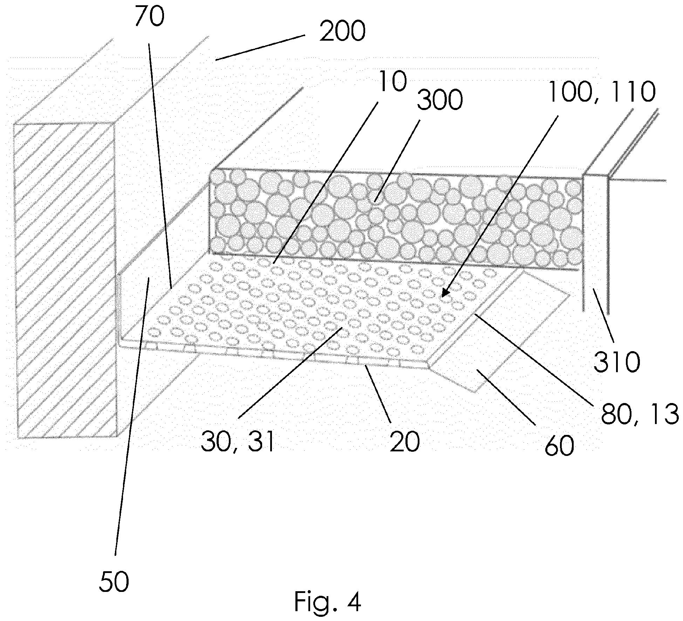

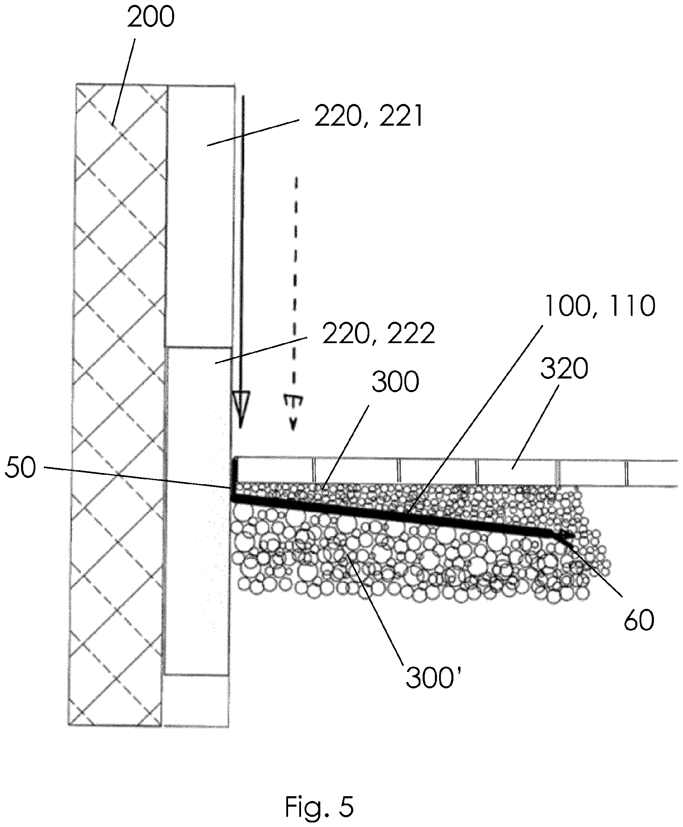

Fig. 4 zeigt den Einbau einer Ausführungsform der erfindungsgemässen Vorrichtung entlang einer Gebäudewand 200 wie beispielsweise einer Hausmauer in schräger Aufsicht. Nachdem die Lasche 50 an der ersten (Längs)Seite 70 der Vorrichtung 100 formschlüssig an der Wand 200 eines Gebäudes oder an der Fassade 210 eines Gebäudes (gezeigt in Fig. 5) angebracht wurde, werden Erde und/oder Steine 300 auf die Deckschicht 10 aufgebracht. Idealerweise wird die Vorrichtung 100 schräg abfallend von der Gebäudewand 200 bzw. von der Gebäudefassade 210 weg im Erdreich verlegt, wodurch der Fluss des Wassers durch die Vorrichtung 100 gefördert wird. Meist wird die Kiesschicht 300 durch entsprechende Steinplatten 310 begrenzt.

Fig. 5 zeigt den Einbau in Seitenansicht. Hier wurde unterhalb der erfindungsgemässen Vorrichtung 100 Rundkornkies 300' mit einer Grösse im Bereich von 8-16 mm und oberhalb der erfindungsgemässen Vorrichtung 100 Split 300 mit einer Grösse im Bereich von 4-8 mm zur Verlegung der erfindungsgemässen Vorrichtung 100 im Erdreich verwendet. Die Splitschicht ist dann mit Pflastersteinen 320 abgedeckt. Hier könnten auch alternativ Verbund- oder Rundsteine verwendet werden. Werden Platten verwendet, so sollten diese wasserdurchlässig sein. Bevorzugt weist die erfindungsgemässe Vorrichtung dann eine Breite bis zu 100 cm auf.

Gut zu sehen ist die schräge Verlegung der erfindungsgemässen Vorrichtung 100 im Erdreich. Die Befestigung der erfindungsgemässen Vorrichtung 100 erfolgt hier formschlüssig über die Lasche 50 an der Dämmschicht 220, und zwar bevorzugt an der Perimeterisolation 222. Dies hat den Vorteil, dass die erfindungsgemässe Vorrichtung Feuchtigkeit von der Gebäudewand 200 bzw. -fassade 220 fernhält und so deren Lebensdauer erhöht wird.

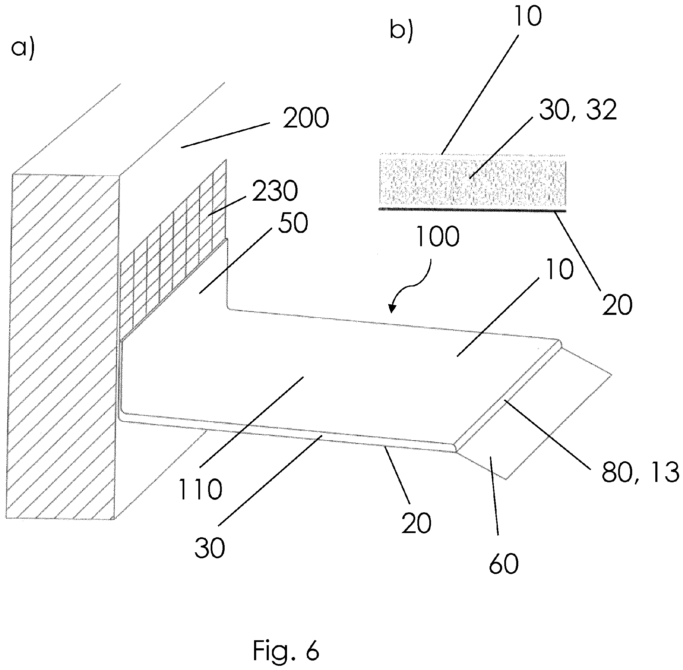

Fig. 6a) zeigt eine alternative Ausführungsform der erfindungsgemässen Vorrichtung 100, die mit ihrer Lasche 50 an der Armierung 230 befestigt ist. Fig. 6b) zeigt die alternative Reinigungsschicht 30, bei der es sich um eine offene Struktur 32 handelt, in Vergrösserung. Auch hier sind deren Zwischenräume mit dem Filtermaterial 40 (nicht gezeigt) gefüllt.

Fig. 7a) zeigt eine weitere Ausführungsform der erfindungsgemässen Vorrichtung 100, die mit ihrer Lasche 50 an der Armierung 230 einer Hauswand befestigt ist. Fig. 7b) zeigt die alternative Reinigungsschicht 30, die als offene Struktur 32 ausgebildet ist und deren Zwischenräume mit Filtermaterial 40 (nicht gezeigt) gefüllt sind, in Vergrösserung. Bei dieser Ausführungsform der erfindungsgemässen Vorrichtung 100 ist der Reinigungsbereich in vier Abschnitte 111, 112, 113, 114 untergliedert, deren jeweilige Reinigungsschicht 30 mit unterschiedlichem Filtermaterial gefüllt ist.

Fig. 8 zeigt die Verlegung der erfindungsgemässen Vorrichtung 100 um ein Gebäude 1000 herum.

### Bezugszeichenliste

- 1: Gereinigtes Wasser
- 2: Wasser von der Hauswand
- 3: Abprallende Wassertropfen (Regen)
- 4, 4': Filterstrecke
- 5: Probenentnahmegefäss

- 1000: Gebäude
- 100: Vorrichtung zur Reinigung von verunreinigtem Wasser, insbesondere zur Reinigung von Fassadenwasser
- 110: Reinigungsbereich
- 111, 112, 113, 114: Abschnitt des Reinigungsbereichs
- 200: Gebäudewand
- 210: Fassade
- 220: Dämmschicht
- 221: Dämmschicht aus EPS und/oder Steinwolle
- 222: Perimeterisolation
- 230: Armierung
- 300, 300': Schicht aus Erde und/oder Steinen
- 310: Steinplatte
- 320: Pflastersteine, Verbundsteine

- 10: wasserdurchlässige und/oder semipermeable Deckschicht
- 20: wasserundurchlässige Bodenschicht
- 11: erste wasserdurchlässige Deckschicht
- 12: zweite wasserdurchlässige Deckschicht
- 13: wasserdurchlässiger Bereich

- 30: Reinigungsschicht
- 31: Noppenplastik
- 32: offene Struktur
- 40: Filtermaterial
- 41: Zwischenräume
- 50: erste Lasche
- 60: zweite Lasche
- 70: erste Seite (Längsseite)
- 80: zweite Seite (Längsseite)
- 90: Schmalseite

## Patentansprüche

1. Eine Vorrichtung (100) zur Reinigung von Wasser, insbesondere zur Reinigung von Fassadenwasser, umfassend
a) eine wasserdurchlässige und/oder semipermeable Deckschicht (10), durch welche Wasser in die Vorrichtung (100) fliessen kann;
b) eine Bodenschicht (20);
c) eine Reinigungsschicht (30), welches sich zwischen der wasserdurchlässigen und/oder semipermeablen Deckschicht (10) und der Bodenschicht (20) befindet und ein Filtermaterial (40) enthält; sowie
d) eine erste Seite (70); und
e) einen wasserdurchlässigen Bereich (13);
**dadurch gekennzeichnet, dass**
die Bodenschicht (20) wasserundurchlässig ist, und die Vorrichtung (100)
f) eine Lasche (50) an der ersten Seite (70) umfasst, welche form- und/oder kraftschlüssig an der Wand (200) eines Gebäudes oder an der Fassade (210) eines Gebäudes anbringbar ist.

2. Die Vorrichtung (100) nach Anspruch 1, **dadurch gekennzeichnet, dass** die Vorrichtung (100) ausserdem eine zweite Seite (80) umfasst, welche der ersten Seite (70) gegenüberliegt.

3. Die Vorrichtung (100) nach Anspruch 2, **dadurch gekennzeichnet, dass** die Vorrichtung (100) ausserdem
g) eine Lasche (60) an der zweiten Seite (80) umfasst.

4. Die Vorrichtung (100) nach einem der Ansprüche 1 bis 3, **dadurch gekennzeichnet, dass** die Lasche (50) oder die Laschen (50, 60) wasserundurchlässig ist/sind.

5. Die Vorrichtung (100) nach einem der Ansprüche 1 bis 4, **dadurch gekennzeichnet, dass** auf der Oberseite der Lasche (50) oder der Laschen (50, 60) ein überstehendes Glasfaser-Gitter angebracht ist/sind.

6. Die Vorrichtung (100) nach einem der Ansprüche 1 bis 5, **dadurch gekennzeichnet, dass** die Vorrichtung (100) aufrollbar ist.

7. Die Vorrichtung (100) nach einem der Ansprüche 1 bis 6, **dadurch gekennzeichnet, dass** die Deckschicht (10) wasserdurchlässig ist, und wobei die wasserdurchlässige Deckschicht (10) ein wasserdurchlässiges Vlies oder eine Kombination aus einem Geovlies und einem feineren Vlies ist, wobei das Geovlies bevorzugt die oberste Schicht ist.

8. Die Vorrichtung (100) nach einem der Ansprüche 1 bis 7, **dadurch gekennzeichnet, dass** die wasserundurchlässige Bodenschicht (20) eine Kunststofffolie ist.

9. Die Vorrichtung (100) nach einem der Ansprüche 1 bis 8, **dadurch gekennzeichnet, dass** die Reinigungsschicht (30) der Vorrichtung druckfest ist, und/oder dass die Reinigungsschicht (30) als strukturierte Schicht ausgebildet ist.

10. Die Vorrichtung (100) nach Anspruch 9, **dadurch gekennzeichnet, dass** die Reinigungsschicht (30) als Noppenplastik (31) oder als offene Struktur (32) ausgebildet ist, deren Zwischenräume (41) mit dem Filtermaterial (40) gefüllt sind.

11. Die Vorrichtung (100) nach einem der Ansprüche 1 bis 10, **dadurch gekennzeichnet, dass** das Filtermaterial (40) Aktivkohle und/oder Molekularsieb und/oder ein anderes absorbierendes Material umfasst.

12. Ein Gebäude (1000) umfassend eine Vorrichtung (100) nach einem oder mehreren der Ansprüche 1 bis 11, wobei die Vorrichtung (100) an der Fassade des Gebäudes (1000) über die Lasche (50) an der ersten Seite (70) der Vorrichtung befestigt ist.

13. Das Gebäude (1000) nach Anspruch 12, **dadurch gekennzeichnet, dass** sich zumindest ein Teil der Vorrichtung (100) unterhalb einer Erdschicht und/oder einer Steinschicht befindet.

14. Verwendung der Vorrichtung (100) nach einem der Ansprüche 1 bis 11 zur Reinigung von Wasser, insbesondere zur Reinigung von Fassadenwasser.

15. Verfahren zum Anbringen einer Vorrichtung (100) nach einem der Ansprüche 1 bis 11 an einem Gebäude enthaltend den folgenden Schritt:
i) Kraft- oder formschlüssiges Anbringen der Lasche (50) an der Wand (200) des Gebäudes oder an der Fassade (210) des Gebäudes; und
ii) Aufbringen von Erde und/oder Steinen auf die Deckschicht (10).

## Geänderte Patentansprüche

### Geänderte Patentansprüche gemäss Regel 137(2) EPÜ.

1. Eine Vorrichtung (100) zur Reinigung von Wasser, insbesondere zur Reinigung von Fassadenwasser, umfassend
a) eine wasserdurchlässige und/oder semipermeable Deckschicht (10), durch welche Wasser in die Vorrichtung (100) fliessen kann;
b) eine Bodenschicht (20);
c) eine Reinigungsschicht (30), welche sich zwischen der wasserdurchlässigen und/oder semipermeablen Deckschicht (10) und der Bodenschicht (20) befindet und ein Filtermaterial (40) enthält;
sowie
d) eine erste Seite (70); und
e) einen wasserdurchlässigen Bereich (13);
**dadurch gekennzeichnet, dass**
die Bodenschicht (20) wasserundurchlässig ist, und die Vorrichtung (100) aufrollbar ist und
f) an der ersten Seite (70) eine wasserundurchlässige Lasche (50) umfasst, welche eine Verlängerung der wasserundurchlässigen Bodenschicht ist und welche form- und/oder kraftschlüssig an der Wand (200) eines Gebäudes oder an der Fassade (210) eines Gebäudes anbringbar ist.

2. Die Vorrichtung (100) nach Anspruch 1, **dadurch gekennzeichnet, dass** die Vorrichtung (100) ausserdem eine zweite Seite (80) umfasst, welche der ersten Seite (70) gegenüberliegt, und
g) eine Lasche (60) an der zweiten Seite (80).

3. Die Vorrichtung (100) nach Anspruch 2, **dadurch gekennzeichnet, dass** die Lasche (60) an der zweiten Seite (80) wasserundurchlässig ist.

4. Die Vorrichtung (100) nach einem der Ansprüche 1 bis 3, **dadurch gekennzeichnet, dass** auf der Oberseite der Lasche (50) oder der Laschen (50, 60) ein überstehendes Glasfaser-Gitter angebracht ist/sind.

5. Die Vorrichtung (100) nach einem der Ansprüche 1 bis 4, **dadurch gekennzeichnet, dass** die Deckschicht (10) wasserdurchlässig ist, und wobei die wasserdurchlässige Deckschicht (10) ein wasserdurchlässiges Vlies oder eine Kombination aus einem Geovlies und einem feineren Vlies ist, wobei das Geovlies bevorzugt die oberste Schicht ist.

6. Die Vorrichtung (100) nach einem der Ansprüche 1 bis 5, **dadurch gekennzeichnet, dass** die wasserundurchlässige Bodenschicht (20) eine Kunststofffolie ist.

7. Die Vorrichtung (100) nach einem der Ansprüche 1 bis 6, **dadurch gekennzeichnet, dass** die Reinigungsschicht (30) der Vorrichtung druckfest ist, und/oder dass die Reinigungsschicht (30) als strukturierte Schicht ausgebildet ist.

8. Die Vorrichtung (100) nach Anspruch 7, **dadurch gekennzeichnet, dass** die Reinigungsschicht (30) als Noppenplastik (31) oder als offene Struktur (32) ausgebildet ist, deren Zwischenräume (41) mit dem Filtermaterial (40) gefüllt sind.

9. Die Vorrichtung (100) nach einem der Ansprüche 1 bis 8, **dadurch gekennzeichnet, dass** das Filtermaterial (40) Aktivkohle und/oder Molekularsieb und/oder ein anderes absorbierendes Material umfasst.

10. Ein Gebäude (1000) umfassend eine Vorrichtung (100) nach einem oder mehreren der Ansprüche 1 bis 9, wobei die Vorrichtung (100) an der Fassade des Gebäudes (1000) über die Lasche (50) an der ersten Seite (70) der Vorrichtung befestigt ist.

11. Das Gebäude (1000) nach Anspruch 10, **dadurch gekennzeichnet, dass** sich zumindest ein Teil der Vorrichtung (100) unterhalb einer Erdschicht und/oder einer Steinschicht befindet.

12. Verwendung der Vorrichtung (100) nach einem der Ansprüche 1 bis 9 zur Reinigung von Wasser, insbesondere zur Reinigung von Fassadenwasser.

13. Verfahren zum Anbringen einer Vorrichtung (100) nach einem der Ansprüche 1 bis 9 an einem Gebäude enthaltend folgende Schritte:
i) Kraft- oder formschlüssiges Anbringen der Lasche (50) an der Wand (200) des Gebäudes oder an der Fassade (210) des Gebäudes; und
ii) Aufbringen von Erde und/oder Steinen auf die Deckschicht (10).
